# EUROPÄISCHE PATENTANMELDUNG

(11) **EP 0 896 234 A2**
(43) Veröffentlichungstag der Anmeldung: **10.02.1999**
(21) Anmeldenummer: 98112027.2
(22) Anmeldetag: 30.06.1998
(51) Int. Cl.: G02B 6/38, G02B 6/32, H01R 13/17

(54) **Linsenkopplung für Glasfaserkabel**

(30) Priorität: 04.08.1997 DE 19733648
(71) Anmelder: Bombardier Transportation Talbot GmbH & Co.KG, 52070 Aachen (DE)
(72) Erfinder: Hensen, Rob, 6412 ZX Heerlen (NL)

(57) **Zusammenfassung**

Die Erfindung betrifft eine Linsenkopplung (3) für Glasfaserkabel (7) zur Übertragung von Daten. Sie weist zwei, im Abstand einander gegenüberliegende, zur Längsachse eines Glasfaserkabels (7) konzentrische Hülsen (9) auf, in denen das Ende von jeweils einem von zwei miteinander zu koppelnden Glasfaserkabeln (7) eingebettet ist. In jeder der Hülsen (9) ist eine im Abstand ihrer Brennweite vor dem Ende des jeweiligen Glasfaserkabels (7) angeordnete konvexe Linse vorgesehen, die eine lichtdurchgängige Abdeckung vor der Linse aufweist. Die Abdeckung ragt um ein geringes Maß über die Stirnseite der Hülse (9) hinaus. Jede Hülse (9) ist in Richtung der Längsachse des Glasfaserkabels (7) in einem Gehäuse gelagert und schließt mit der Stirnseite des Gehäuses annähernd bündig ab. Zur Übertragung von elektrischer Energie ist ein Kontakt (5) vorgesehen, der in seitlichem Abstand (4) in der Hülse (9) oder im Gehäuse elastisch gelagert ist und dessen Kontaktfläche (17) um ein geringes Maß (18) über die Stirnseite (19) der Hülse (9) herausragt.

## Beschreibung

Die Erfindung betrifft eine Linsenkopplung für Glasfaserkabel zur Übertragung von Daten mit zwei, einander gegenüberliegenden, zur Längsachse eines Glasfaserkabels konzentrischen Hülsen, in denen das Ende von jeweils einem von zwei miteinander zu koppelnden Glasfaserkabeln eingebettet ist sowie jeweils einer, in der Hülse im Abstand ihrer Brennweite vor dem Ende des jeweiligen Glasfaserkabels angeordneten, konvexen Linse mit einer lichtdurchlässigen Abdeckung vor der Linse, die um ein geringes Maß über die Stirnseite der Hülse herausragt, wobei jede Hülse in einem Gehäuse elastisch gelagert ist und mit der Stirnseite des Gehäuses annähernd bündig abschließt.

Ein Linsenkoppler dieser Art ist aus den Wissenschaftlichen Berichten AEG- TE-LEFUNKEN 53 (1980), Seite 37, Figur 10 und zugehörigem Text, bekannt. Befindet sich bei dem bekannten Linsenkoppler eine konvexe Linse in Brennweite vor einem Faserende, so entsteht ein paralleles Strahlenbündel. Mit einer zweiten Linse wird das Parallelstrahlenbündel auf die Faserstirnfläche der abgehenden Faser fokussiert. Dieses Prinzip ist die Ausgangsbasis für einen Linsenstecker. Faserende, Linse und eventuelle Schutzgläser werden mit einer speziellen Justiervorrichtung optimal ausgerichtet. Durch die Vergrößerung der Lichtfläche mit Hilfe der Linsen ist gleichzeitig eine Verbesserung der axialen und transversalen Justieranforderungen der Grundelemente gegeneinander festzustellen. Demnach sind die bekannten Linsenkoppler verhältnismässig unempfindlich gegen seitlichen Versatz der Glasfaserkabel. Die bekannten Linsenkoppler sind auch weitgehend unempfindlich gegen Verunreinigungen und eignen sich auch zum Einsatz unter schwierigen klimatischen Bedingungen. So ist z.B. von einem Vierfach- Linsenstecker die Rede, der für den Einsatz in Triebwagenkupplungen entwickelt worden ist, und dabei wird besonders die Unempfindlichkeit gegenüber seitlichem Versatz und gegenüber Abstand bei der automatischen Zugkupplung ausgenutzt.

Glafaserkopplungen, die in Kupplungen von Eisenbahnfahrzeugen eingesetzt werden, sind bekanntlich einem rauhen Betrieb ausgesetzt. Im Zusammenhang damit ist beispielsweise aus der WO 96/07944 ein weiterer Linsenkoppler für die optische Verbindung von Lichtleitern bekannt geworden. Dieser Linsenkoppler eignet sich besonders zum Einsatz bei Zuggliedern, also Kupplungen, und großen Energieschaltern, welche bewegliche Schlitten aufweisen; das Problem des Verschleißes und Staubs in diesen Anwendungsfällen ist besonders groß. Aus diesem Grunde ist der bekannte Linsenkoppler zunächst in einem Gehäuse in Richtung der Längsachse des Glasfaserkabels und auch normal dazu elastisch gelagert. Außerdem besteht die Abdeckplatte aus einem harten, kratzfesten Material, vorzugsweise aus Saphir. Die Abdeckplatte ragt sodann etwa 0,5 mm über die Stirnfläche des Kupplungsgehäuses hinaus. Dieser Überstand bewirkt, dass beim Kuppeln von Glasfaserkabeln die einander entsprechenden Abdeckplatten hart aufeinander gepresst werden, sodass im wahrsten Sinne des Wortes eine 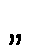 Kopplung" zustande kommt. Die Kopplung ist möglich, weil ja die Hülsen, in denen die Glasfaserenden mit ihren jeweiligen Linsen und Abdeckplatten angeordnet sind, innerhalb eines Gehäuses elastisch gelagert sind. Die Abdeckplatten werden demnach fest aufeinander gepresst und das Eindringen von Schmutzteilchen ist unmöglich. Außerdem bewirkt die elastische Lagerung, dass ein Biegeversatz, wie er bei Eisenbahnkupplungen möglich ist, für die Übertragung von Licht unschädlich ist.

Ausgehend von diesem Stande der Technik liegt der Erfindung die Aufgabe zugrunde, die bekannte Linsenkopplung weiterzubilden. Insbesondere soll unter Verzicht auf eine mögliche Verschraubung oder gleichartige Verbindung der Kupplungsgehäuse neben der Ankopplung von einzelnen oder mehreren Lichtwellenleitern gleichzeitig auch eine Übertragung von Energie möglich sein. Insbesondere soll die Übertragung von Daten mit Hilfe der Glasfaserkabel und Energie mit Hilfe von Stromkabeln durch reine Ankopplung bewirkt werden an Stellen, wo ein Verschrauben oder sonstiges Verbinden der miteinander zu koppelnden Stränge nicht möglich ist. Zusätzlich soll die Ankopplung betriebssicher sein und unempfindlich gegen Schmutz, seitlichen Versatz oder geringe Biegeabweichungen. Darüber hinaus soll die Verbindung auch noch preisgünstig sein.

Zur Lösung dieser Aufgabe sieht die Erfindung vor, dass zur Übertragung von elektrischer Energie im seitlichen Abstand von der Linsenkopplung ein Kontakt vorgesehen ist, der in der Hülse oder im Gehäuse elastisch gelagert ist und dessen Kontaktfläche um ein geringes Maß über die Stirnseite des Gehäuses herausragt.

Hiermit wird zunächst neben der Möglichkeit der Übertragung von Daten über das Glasfaserkabel die weitergehende Möglichkeit zur gleichzeitigen Übertragung von Energie von einem Kupplungsgehäuse auf das andere geschaffen. Auch hier erfolgt die Übertragung durch reine Ankopplung der energieführenden Leiter.

Nach einer ersten vorteilhaften Ausführungsform ist der Kontakt für die Energieübertragung als zylindrischer Stift ausgebildet, dessen Längsachse sich in Richtung der Längsachse des Glasfaserkabels erstreckt. Auch ist vorgesehen, dass die Kontaktfläche des zylindrischen Stiftes konvex nach außen gewölbt ist. Neben der bereits bekannten zylindrischen Form des Kupplungsgehäuses ist ein Gehäuse vorgesehen, das eine Rechteckform hat. Auch ist es möglich, neben einer Mehrzahl von Glasfaserkabeln eine Mehrzahl von energieführenden Leitern gleichzeitig miteinander zu koppeln.

Von besonderem Interesse sind diese Ausgestaltungen beim Einsatz in flächenhaften Strukturelementen, wie sie zum modularen Aufbau von Wagenkästen, insbesondere von Eisenbahnwaggons, vorgesehen sind. Als Module bezeichnet man vorgefertigte, flächenhafte Teile, die an Längsträgern, Pfetten genannt, und Querträgern, Spriegel genannt, mit Hilfe von formschlüssigen Klemmorganen, beispielsweise Mieten oder Schrauben, zu einem Wagenkasten zusammengefügt werden. Das Zusammenfügen erfolgt mit relativ hoher Genauigkeit, wobei die Toleranz für seitlichen Versatz der einzelnen Module unterhalb von 1 mm liegt. Solche Module sind auch hinsichtlich des Ausbaus auf der Innenseite des Wagenkastens weitgehend vorgefertigt. Dabei werden elektrische Leitungen zur Stromversorgung als auch Glasfaserkabel zur Übertragung von Daten in den Innenausbau sofort mit eingebaut. Das bedingt, dass ein späteres, gesondertes Verschrauben oder Klemmen solcher Leitungsstränge nicht mehr möglich ist, sobald die Module zusammengefügt sind. Da Leitungsstränge, abgesehen von einigen Ausnahmen, überwiegend in Längsrichtung eines Wagekastens verlegt werden, wird die erfindungsgemäße Linsenkopplung vorzugsweise in zwei miteinander zu verbindenden Spriegeln der Module vorgesehen. Weitergehende vorteilhafte Ausgestaltungen ergeben sich aus den einzelnen Unteransprüchen.

Nachfolgend wird die Erfindung an einem Ausführungsbeispiel näher beschrieben. Es zeigen, jeweils schematisch und in nicht maßstäblicher Form die
- Fig. 1 ein Schaltschema,
- Fig. 2 einen kombinierten Koppler für Glasfaserkabel und elektrische Energie im Querschnitt entlang der Linie II - II der Fig. 3,
- Fig. 3 eine Stirnansicht eines Kopplers mit einem runden Gehäuse,
- Fig. 4 die Einbaulage eines Vielfachkopplers in einem Modulelement in Draufsicht und
- Fig. 5 eine Stirnansicht des Vielfachkopplers der Fig. 4.

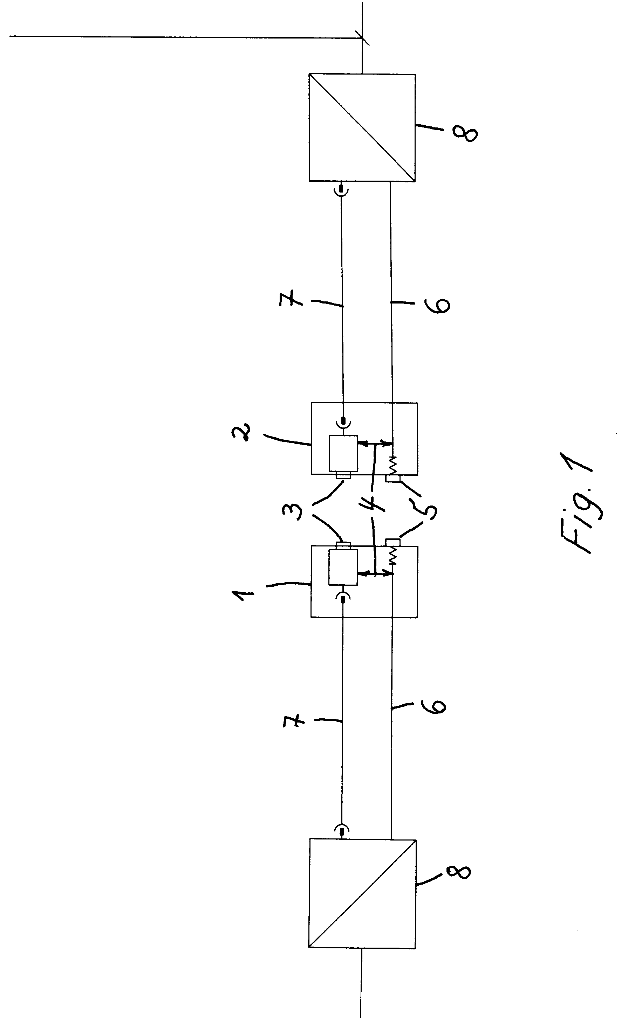

In der Fig. 1 ist mit der Ziffer 1 schematisch ein Kupplungsgehäuse bezeichnet, das zur Kupplung mit einem gleichartig ausgestalteten Kupplungsgehäuse 2 vorgesehen ist. In den Kupplungsgehäusen 1 und 2 liegen zwei Linsenkopplungen 3 einander entsprechend gegenüber von der Art, wie sie aus dem Stande der Technik bekannt sind und vorstehend beschrieben wurden. In seitlichem Abstand zu den Linsenkopplungen 3, angedeutet durch die Doppelpfeile 4, sind in den Gehäusen 1 und 2 einander entsprechende Kontakte 5 angeordnet, die zur Kopplung von zwei energieführenden Strängen 6 vorgesehen sind. Über die Linsenkopplungen 3 werden Glasfaserkabel 7 miteinander verbunden, die zur Übertragung von Daten vorgesehen sind. Sowohl die elektrischen Leiter 6 als auch die Glasfaserkabel 7 enden in Anschlusskästen 8. Zur Vermittlung einer Vorstellung dessen, welche Daten und Energien in einer Schaltung nach Fig. 1 beispielsweise übertragen werden können, dienen die nachfolgenden Tabellen 1 bis 5.

Kombinierte Kopplung. Übertragung von Energie und Daten in zwei Richtungen Das System ist in der Figur 1 dargestellt.

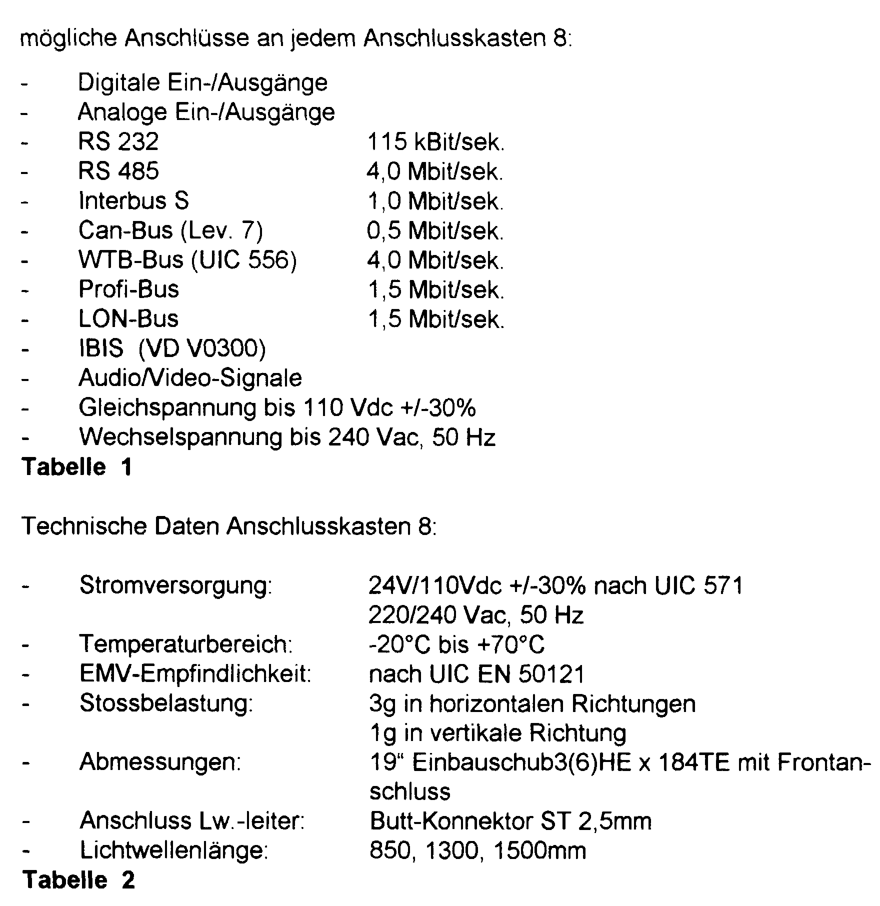

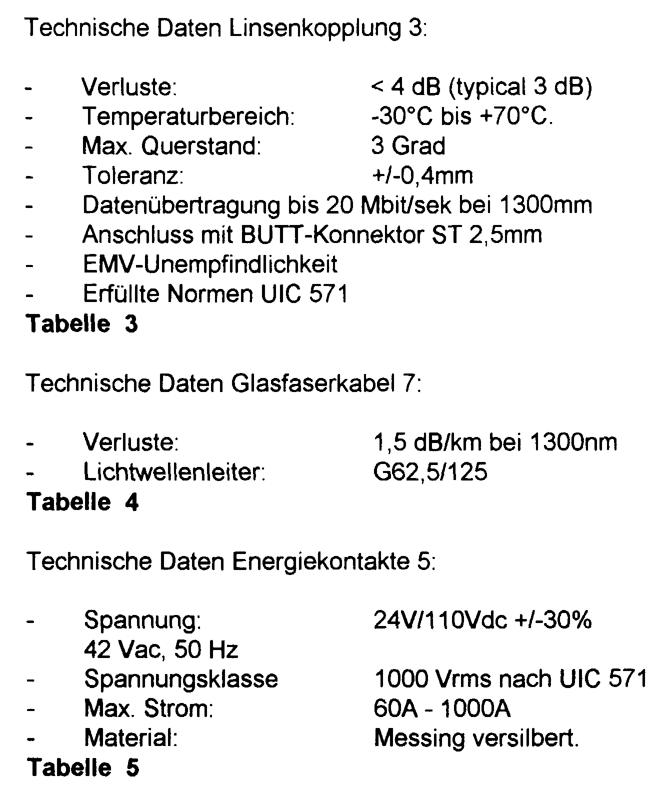

Entsprechend der Fig. 2 sind in einer gemeinsamen Hülse 9 eine bekannte Linsenkopplung 3 und ein elektrischer Kontakt 5 in seitlichem gegenseitigen Abstand 4 in der Weise angeordnet, dass sie einander nicht berühren und dass die Längsachsen eines Glasfaserkabels 7 und eines elektrischen Leiters 6 annähernd parallel zueinander verlaufen. Der Kontakt 5 stützt sich beispielsweise über ein Federelement 10 in axialer Richtung und quer dazu elastisch auf der Hülse 9 ab. Anstelle eines Federelements kann die Abstützung auch durch ein Element aus Kautschuk oder Kunststoff erfolgen.

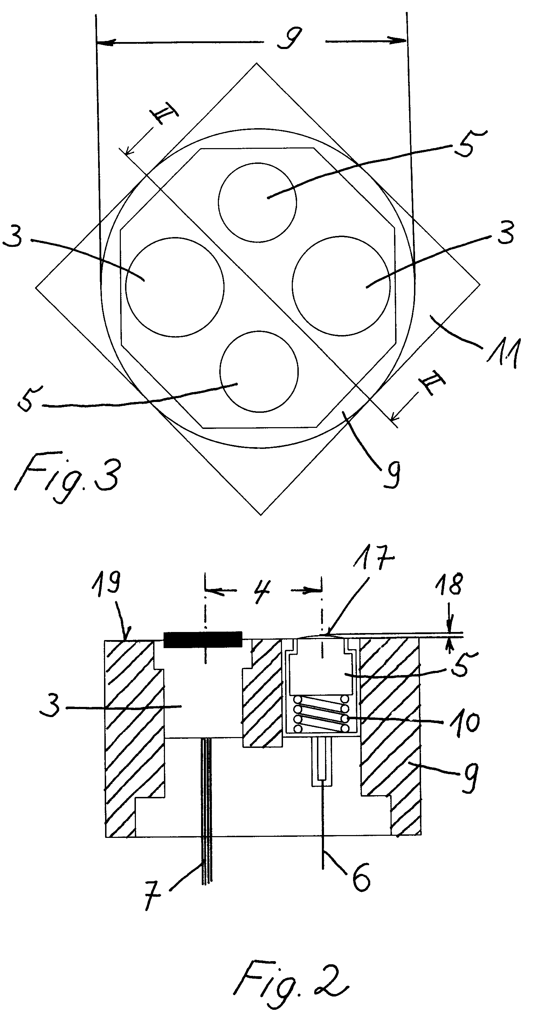

Wie aus der Fig. 3 erkennbar, sind in der Hülse 9 insgesamt zwei Linsenkopplungen 3 und zwei Kontakte 5 angeordnet. Die Fig. 2 stellt einen Schnitt durch die Hülse 9 in Richtung der Linie II - II dar. Die Hülse 9 wiederum ist in einem quadratischen Gehäuse 11 gelagert. Das Gehäuse 11 ist mit übrigen Teilen ( nicht gezeigt) beispielsweise einer Kupplung zwischen Eisenbahnwaggons angeordnet.

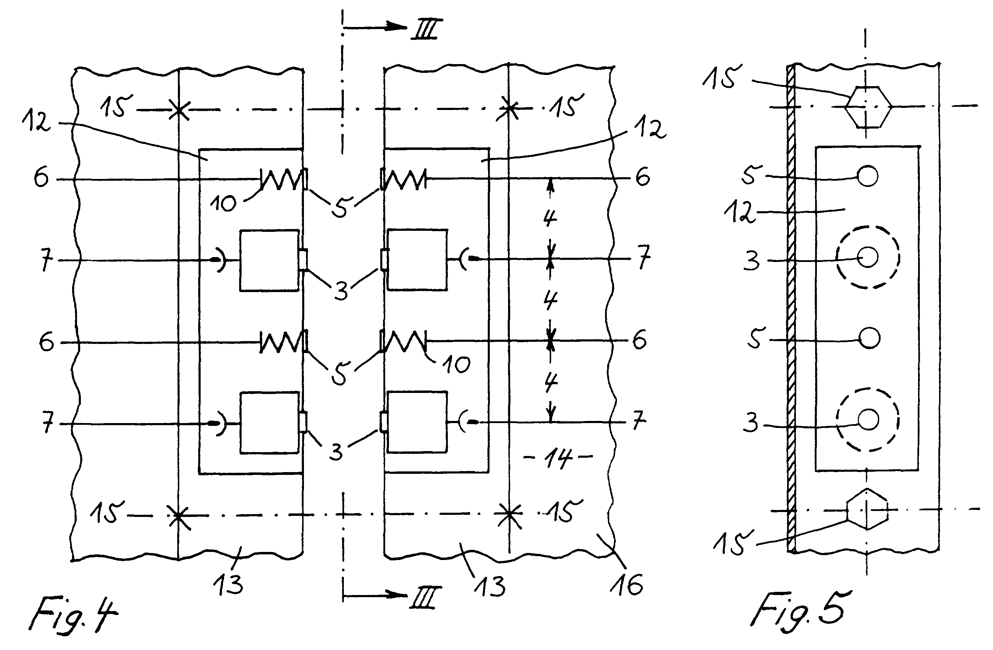

In der Fig. 4 sind zwei rechteckige Gehäuse 12 vorgesehen, in welchen Kontakte 5 und Linsenkopplungen 3 in einer Reihe liegend angeordnet sind. Im vorliegenden Falle sind die rechteckigen Gehäuse 12 in zwei einander gegenüberliegenden Spriegeln 13 von modularen Aufbauelementen 14 vorgesehen, wie sie zur Zusammensetzung des Kastens eines Eisenbahnwaggons geeignet sind. Die Fig. 4 und 5 zeigen jeweils einen Ausschnitt aus solchen Modulen. Die beiden Module 14 werden beispielsweise über kombinierte Schraub- Klemmverbindungen 15 über die Spriegel 13 fest und unlösbar miteinander verbunden. Die Verbindung wird allenfals einmal gelöst, wenn eines der beiden Module zu Reparaturzwecken ausgetauscht werden muß. Bleche 16 bilden die Außenhaut der Module 14, mit denen diese beplankt sind.

Aus den Darstellungen der Fig. 4 und 5 wird klar erkennbar, dass eine Energieübertragung zwischen den Kontakten 5 und eine Datenübertragung zwischen den Linsenkopplungen 3 allein nur durch gegenseitige Berührung erfolgt, weil irgendein Verschrauben der beiden rechteckigen Gehäuse 12, sei es über ein Schraubgewinde zwischen diesen beiden Gehäusen 12 oder einen Bajonettverschluß, nicht möglich wäre. Daneben ist auch die Möglichkeit vorgesehen, dass mehrere Gehäuse 12 in Längsrichtung der Spriegel 13 oder übereinanderliegend zusammengesetzt sein können.

### Ziffernverzeichnis:

- 1: Kupplungsgehäuse
- 2: Kupplungsgehäuse
- 3: Linsenkopplung
- 4: seitlicher Abstand
- 5: Kontakt
- 6: el. Leiter
- 7: Glasfaserkabel
- 8: Anschlusskasten
- 9: Hülse
- 10: Federelement
- 11: quadratisches Gehäuse
- 12: rechteckiges Gehäuse
- 13: Spriegel
- 14: Modul
- 15: Schraub- Klemm- Verbindung
- 16: Blech
- 17: Kontaktfläche
- 18: geringes Maß
- 19: Stirnfläche

## Patentansprüche

1. Linsenkopplung für Glasfaserkabel zur Übertragung von Daten mit zwei, einander gegenüberliegenden, zur Längsachse eines Glasfaserkabels konzentrischen Hülsen, in denen das Ende von jeweils einem von zwei miteinander zu koppelnden Glasfaserkabeln eingebettet ist sowie jeweils einer, in der Hülse im Abstand ihrer Brennweite vor dem Ende des jeweiligen Glasfaserkabels angeordneten, konvexen Linse mit einer lichtdurchlässigen Abdeckung vor der Linse, die um ein geringes Maß über die Stirnseite der Hülse herausragt, wobei jede Hülse in einem Gehäuse elastisch gelagert ist und mit der Stirnseite des Gehäuses annähernd bündig abschließt, dadurch gekennzeichnet, dass zur Übertragung von elektrischer Energie,
- im seitlichen Abstand (4) von der Linsenkopplung (3) ein Kontakt (5) vorgesehen ist,
- der in der Hülse (9) oder im Gehäuse (1,2,11,12)elastisch gelagert ist und
- dessen Kontaktfläche (17) um ein geringes Maß (18) über die Stirnfläche (19) der Hülse (9) bzw. des Gehäuses(11,12) herausragt.

2. Linsenkopplung nach Anspruch 1, dadurch gekennzeichnet, dass der Kontakt als zylindrischer Stift (5) ausgebildet ist, dessen Längsachse in Richtung der Längsachse des Glasfaserkabels (7) orientiert ist.

3. Linsenkopplung nach Anspruch 2, dadurch gekennzeichnet, dass die Kontaktfläche (17) des zylindrischen Stiftes (5) konvex gewölbt ist.

4. Linsenkopplung nach Anspruch 1, dadurch gekennzeichnet, dass das Gehäuse (1,2) eine zylindrische Form hat.

5. Linsenkopplung nach Anspruch 1, dadurch gekennzeichnet, dass das Gehäuse (11,12) eine Rechteckform hat.

6. Linsenkopplung nach einem der Ansprüche 1 bis 5, dadurch gekennzeichnet, dass eine Mehrzahl von Linsenkopplungen (3) innerhalb einer Hülse (9) vorgesehen ist.

7. Linsenkopplung nach einem der Ansprüche 1 bis 6, dadurch gekennzeichnet, dass in der Hülse (9) oder im Gehäuse (1,2,11,12) eine Mehrzahl von Kontakten (5) vorgesehen ist.

8. Linsenkopplung nach einem der Ansprüche 1 bis 7, dadurch gekennzeichnet, dass sie in miteinander zu verbindenden Spriegeln (13) zweier flächenhafter Strukturelemente (14) angeordnet ist, die zum modularen Aufbau eines Wagenkastens vorgesehen sind.

9. Linsenkopplung nach Anspruch 8, dadurch gekennzeichnet, dass sie für den Wagenkasten eines Eisenbahnwaggons zur Beförderung von Personen oder Gütern vorgesehen ist.
